Europäisches Patentamt

European Patent Office

Office européen des brevets

(19)

(11) Veröffentlichungsnummer: **0 178 382**
**B1**

(12) **EUROPÄISCHE PATENTSCHRIFT**

(45) Veröffentlichungstag der Patentschrift: **12.12.90**

(21) Anmeldenummer: **85107584.6**

(22) Anmeldetag: **19.06.85**

(51) Int. Cl.⁵: **E 04 D 11/00,** A 01 G 1/00,
A 01 G 9/00

(54) **Drainageelement.**

(30) Priorität: **16.10.84 DE 3437767**

(43) Veröffentlichungstag der Anmeldung:
**23.04.86 Patentblatt 86/17**

(45) Bekanntmachung des Hinweises auf die
Patenterteilung:
**12.12.90 Patentblatt 90/50**

(84) Benannte Vertragsstaaten:
**AT BE CH DE FR GB IT LI LU NL SE**

(56) Entgegenhaltungen:
**BE-A- 899 283
CA-A-1 187 306
DE-A-1 609 996
FR-A-1 560 512**

(73) Patentinhaber: **Gutjahr, Walter, Jr.
Ernst-Ludwig-Weg 29
D-6101 Bickenbach (DE)**

(72) Erfinder: **Gutjahr, Walter, Jr.
Ernst-Ludwig-Weg 29
D-6101 Bickenbach (DE)**

(74) Vertreter: **Helber, Friedrich G., Dipl.-Ing. et al
Zenz, Helber, Hosbach Giesser Weg 47
D-6144 Zwingenberg (DE)**

Courier Press, Leamington Spa, England.

EP 0 178 382 B1

## Beschreibung

Die Erfindung betrifft ein für die Herstellung von Flächendrainagen zur Entwässerung darüberliegender Estriche, Mörtelschichten oder anderer Beläge bestimmtes Drainageelement.

Terrassen und Balkone werden überwiegend mit keramischen Belagsmaterialien versehen. Die Eigenschaften, die diese Materialien für diesen Einsatzbereich prädestinieren, sind allgemein bekannt. Diese Beläge sind im Vergleich zu anderen keramischen Belägen besonders schadensanfällig. Sowohl dem Fliesenfachmann, als auch dem Architekten ist bekannt, daß gerade im Mörtel- bzw. auf Estrich verlegte Fliesenbeläge in ihrer Haltbarkeit von verschiedenen günstigen Faktoren abhängig sind. Die Mehrzahl der Schäden werden durch in den Zement-Estrich eingedrungenes Wasser verursacht. Bei nicht im Gefälle zu den Entwässerungen verlegten und uneben geklebten Feuchtigkeitsabdichtungen staut sich in den Hohlräumen des Estrichs Wasser auf. Der Fachmann bezeichnet das als Bildung von Wasserlinsen. Innerhalb der Regenperioden füllen sich diese auf, da höher liegende Stellen der Feuchtigkeitsabdichtung ein Abfließen verhindern. Im Winter sprengt dann das zu Eis gefrorene Wasser — durch Volumenvergrößerung — die Porenwandung innerhalb des Estrichgefüges und mindert mit jedem weiteren Frost die Festigkeit. Im Frühjahr, wenn der Belag durch Sonneneinwirkung aufgeheizt wird, diffundiert das im Estrich gestaute Wasser in Dampfform in die Fugenoberfläche. Dabei werden im Zement eingebundene lösliche Kalke und Salze (Kalziumkarbonat) in Mehlform ausgeschieden. Werden die sogenannten Ausblühungen nicht regelmäßig entfernt, kristallisiert das Kalziumkarbonat und ist nur noch mechanisch zu entfernen.

Eine Vielzahl von Balkonen und Terrassen weisen diese Erscheinungen auf, die ein sicheres Indiz für nicht fachund sachgerechte Ausführung der Abdichtung bzw. des darauf verlegten keramischen Außenbelages sind. Nur selten werden vom Fliesenleger Bedingungen vorgefunden, die die Herstellung eines absolut mängelfreien Belages im Außenbereich erlauben. Größtenteils wird bereits bei der Planung auf die abgesenkte Balkondeckenplatte bzw. Dachterrassendecke aus Kostengründen verzichtet. Nur so wäre in den meisten Fällen die Ausbildung eines Gefälle-Estrichs mit ausreichender Neigung (2 bis 3%) möglich. Der Kostendruck wird auch in Zukunft der Grund dafür sein, daß schon konstruktionsbedingt die geforderten Voraussetzungen für die einwandfreie Erstellung dauerhaft haltbarer Außenbeläge vernachlässigt werden. Keramische Außenbeläge unterliegen—infolge von auftretenden Temperaturdifferenzen von maximal ca. 80°C — extremen thermischen Beanspruchungen, die sich in meßbaren Längenveränderungen ausdrücken. Dabei entstehen — selbst bei sogenannten flexiblen und wasserabweisenden Fugenmörteln, die einen günstigeren Elastizitätsmodul aufweisen — Haarrisse innerhalb des Fugenbildes, insbesondere an den Fliesenflanken. Auch wenn die sogenannte Lastverteilungsschicht aus Zement-Estrich durch zwei Gleitfolien von der weichen Abdichtung getrennt ist, können mechanische Beschädigungen an der Abdichtungsebene durch die thermischen Längenveränderungen des Estrichs nicht ausgeschlossen werden. Besonders an den höher liegenden Überlappungen der Abdichtungen aus Schweißbahnen und an den Flanschen von Bodenabläufen, Dachrinnen und Rohrhülsen. Aus diesen Schwachstellen resultieren häufig bereits nach wenigen Jahren auftretende Undichtigkeiten.

Zusammengefaßt bedeutet das, daß Schäden an keramischen Außenbelägen größtenteils durch Wasseransammlungen (Wasserlinsen) innerhalb des Estrichs herbeigeführt werden. Diese entstehen durch eine in der Regel unebene und nicht mit ausreichendem Gefälle versehene Feuchtigkeitsabdichtung.

Schäden an keramischen Außenbelägen und Feuchtigkeitsabdichtungen können langfristig vermieden werden, indem

a) die Feuchtigkeitsbelastung des Estrichs drastisch minimiert wird,

b) sichergestellt ist, daß einmal in den Estrich eingedrungenes Wasser schnell abgeführt werden kann,

c) ein direkter Kontakt der starren Estrichscheibe zur weichen und sensiblen Feuchtigkeitsabdichtung vermieden wird.

Bereits im Merkblatt des Zentralverbandes des Deutschen Baugewerbes "Bodenbeläge aus Fliesen und Platten außerhalb von Gebäuden" aus dem Jahre 1978 wird der Einbau einer Drainageschicht erwähnt. Diese ist jedoch als Kiesschüttung vorgesehen. Ein solches Verfahren hat sich aufgrund verschiedener Nachteile nicht durchgesetzt. Diese sind: Das hohe Gewicht, die umständliche praktische Verarbeitung, der Einbau von Kiesfanggittern an den seitlichen Abschlüssen, und vor allem die hierbei mindestens geforderte Konstruktionsstärke dieser Schicht von 30mm. Bei den hohen Personalkosten konnte sich ein solch arbeitsaufwendiges Verfahren nicht etablieren.

Aufgrund der bereits erwähnten hohen Schadensanfälligkeit sind viele Planer und Bauherren auf Substitute, wie großformatige Betonwerksteinplatten, die auf Stelzlagern verlegt werden, bzw. auf Kiesbetten, ausgewichen. In vielen Fällen werden solche Beläge bereits durch andere Gewerke als denen des Fliesenlegers hergestellt.

Aus der BE—A— 899 283 ist eine folienartige Kunststoffplatte als Drainageschicht für keramische Beläge, deren Oberflächen Wasser ausgesetzt sind, bekannt, welche Ausprägungen aufweist, die sich nach dem Auslegen auf Isolierschicht mit dem Estrichmörtel füllen und nach dessen Aushärten als sich zur Isolierschicht hin verjüngende Aufstandselemente wirken. Die Aussparungen sind in den Seitenwänden mit Schlitzen oder Perforierungen versehen, durch welche in den Belag eingedrungenes Wasser austreten soll. Es ist klar, daß die Entwässerung der Belagkonstruktion auf diese Weise nur in beschränktem Umfang und zeitverzögert möglich ist.

Aus der DE—OS—1 609 996 ist eine unter Abdichtungen von Flachdächern anzuordnende Wärmedämmplatte bekannt, welche mit Innen- und Sammelkanälen versehen ist, über die eine mögliche Dampfdruckbildung und die Entstehung von Luftblasen unter der dampfdichten Abdichtung verhindert werden soll. Ein Einsatz als Drainageplatte ist nicht vorgesehen und wäre — infolge der Anordnung unter der Abdichtung — auch nicht wirksam.

Demgegenüber liegt der Erfindung die Aufgabe zugrunde, ein Mittel zu finden, mit dem man dauerhaft haltbare keramische Außenbeläge sowohl im konventionellen Dickbett-, wie auch im neuzeitlichen Dünnbettverfahren herstellen kann, wobei Priorität die überzeugende und einfache Funktionsweise bzw. die einfache Verarbeitung hat. Bei den erwähnten relativ hohen Personalkosten muß der Einbau zusätzlicher kapillarbrechender Schichten rationell vorgenommen werden können.

Erfindungsgemäß wird diese Aufgabe gelöst durch ein für die Herstellung von Flächendrainagen zur Entwässerung darüberliegender Estriche, Mörtelschichten oder anderer Beläge bestimmtes Drainageelement mit einer Abdeckschicht aus dünnem biegeweichem, luft- und wasserdurchlässigen Material, unter welcher ein System von durch die Abdeckschicht hindurchtretendes Wasser sammelnde und ableitende Kanäle bildenden, aus druckfesten Leichtbaustoffen bestehenden Distanzelementen angeordnet ist, wobei das die Abdeckschicht bildende Material die Form einer langgestreckten Mattenbahn hat, auf deren Unterseite die Distanzelemente in Form von mit Abstand voneinander quer zur Mattenbahn-Längsrichtung verlaufenden, in parallelen Reihen angeordneten Distanzstegen derart aufgeklebt sind, daß die mit den Distanzstegen versehene Mattenbahn aufrollbar ist.

In vorteilhafter Weiterbildung der Erfindung werden die Distanzstege von Hartschaumstreifen gebildet, wobei sie rechteckigen, quadratischen, trapezförmigen oder auch abgerundeten Querschnitt haben können.

Zweckmäßig ist eine Weiterbildung, bei welcher in den Distanzstegen in deren Längsrichtung voneinander beabstandete, über die gesamte Breite der Stege durchgehende, Drainagequerkanäle bildende Aussparungen eingearbeitet sind.

Dabei ist zweckmäßig an einem Ende der Distanzstege jeweils ein zum äußeren Ende des jeweiligen Distanzsteges hin offener Drainagequerkanal mit einem etwa dem halben Querschnitt der übrigen Drainagequerkanäle entsprechenden Querschnitt vorgesehen.

In den Distanzstegen selbst können querverlaufende Sollbruchstellen in im Vergleich zum Abstand der Drainagequerkanäle geringeren Abständen eingearbeitet sein, welche das Zerteilen der Distanzelemente in Längsrichtung erleichtern.

Die Mattenbahn kann schließlich an zwei rechtwinklig zueinander verlaufenden Rändern über die Breite der Distanzstege hinaus vorstehende Überlappungsstreifen aufweisen, mit denen durchgehende Spalten im Anschlußbereich an seitliche oder in Längsrichtung anschließenden Drainageelementen vermieden werden.

Die Erfindung ist in der folgenden Beschreibung eines Ausführungsbeispiels in Verbindung mit der Zeichnung näher erläutert, und zwar zeigt:

Abb. 1 eine perspektivische Ansicht eines in der erfindungsgemäßen Weise ausgebildeten Drainageelements;

Abb. 2 eine Schnittansicht durch einen Teilabschnitt eines unter Verwendung der erfindungsgemäßen Drainageelemente hergestellten Keramik-Außenbelages; und

Abb. 3 eine teilweise geschnittene perspektivische Ansicht eines abgewandelten, unter Verwendung der erfindungsgemäßen Drainageelemente hergestellten keramischen Außenbelages.

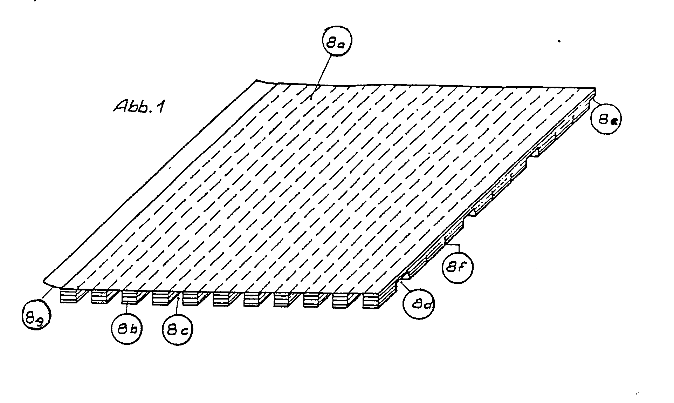

Das in der Abbildung 1 gezeigte erfindungsgemäße Drainageelement besteht aus einer wasserdurchlässigen, dünnschichtigen Mattenbahn 8a, die beispielsweise von einem Filtervlies gebildet werden möge, welches ein Durchdringen des Wassers an jeder Stelle zuläßt. Auf der Unterseite der Mattenbahn 8a sind aus geschlossenzelligem Hartschaum — bzw. anderen ähnlichen dauernaß- und formbeständigen Materialien — Distanzstege 8b so verklebt, daß zwischen ihnen Abstände bestehen, die in der späteren Konstruktion Hohlräume bilden, die hier als Längskanäle 8c und Querkanäle 8d bezeichnet sind. Unterschiedliche Profilquerschnitte, wie z.B. quadratisch, trapezförmig u.ä., können gewählt werden, wenn dadurch sichergestellt wird, daß ein hinreichender Abstand zur sogenannten Lastverteilungsschicht zum Untergrund gehalten wird. Abhängig vom Profilquerschnitt ergeben sich die verschiedenen Formen der Drainagekanäle.

Die Höhe der Distanzstege 8b sollte so gewählt sein, daß der Kontakt des auf dem Drainageelement aufgebrachten Estrichs mit den sogenannten "Wasserlinsen", die bei uneben verklebten Feuchtigkeitsabdichtungen auftreten, ausgeschlossen wird.

Die Drainage-Längskanäle 8c werden untereinander durch Drainagequerkanäle 8d verbunden, deren Höhe und Breite sowie deren Abstände untereinander variabel sind. An jeweils einer Seite der Drainagematte wird ein halber Querkanal 8e eingearbeitet, so daß beim Anstoßen der einzelnen Drainagebahnen ein Verschluß der Drainage-Längskanäle 8c durch die Distanzstege 8b nicht zu einem Wasserstau führen kann. Zwischen den Drainagequerkanälen 8d werden lamellenartige Sollbruchstellen 8f eingearbeitet. Sie stellen eine maximale Anpassungsfähigkeit an möglicherweise unebenen Untergründe sicher.

An jeweils zwei offenen Seiten im rechten Winkel zueinander wird die Drainagematte mit einer Überlappung 8g versehen, so daß innerhalb des Ansatzbereiches zweier Matten kein Zementmörtel in die darunterliegenden Hohlräume fallen kann. Die Drainageelemente sind — bedingt durch ihre Materialkombination — flexibel und werden auf Rollen geliefert, so daß sie auch für den Baustelleneinsatz besonders praktisch sind.

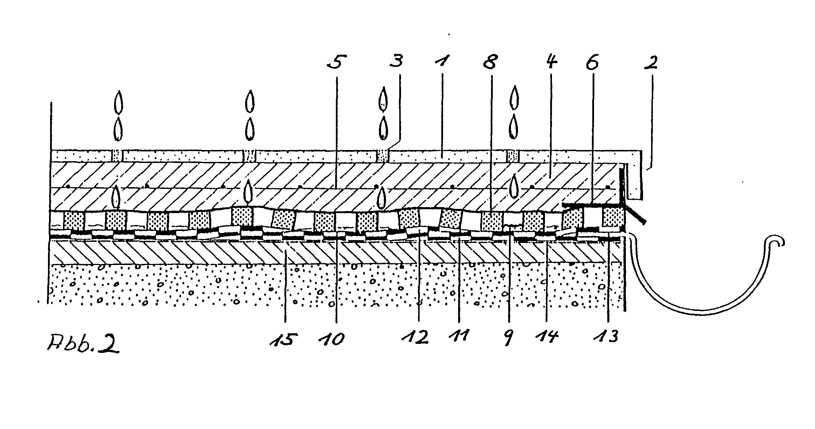

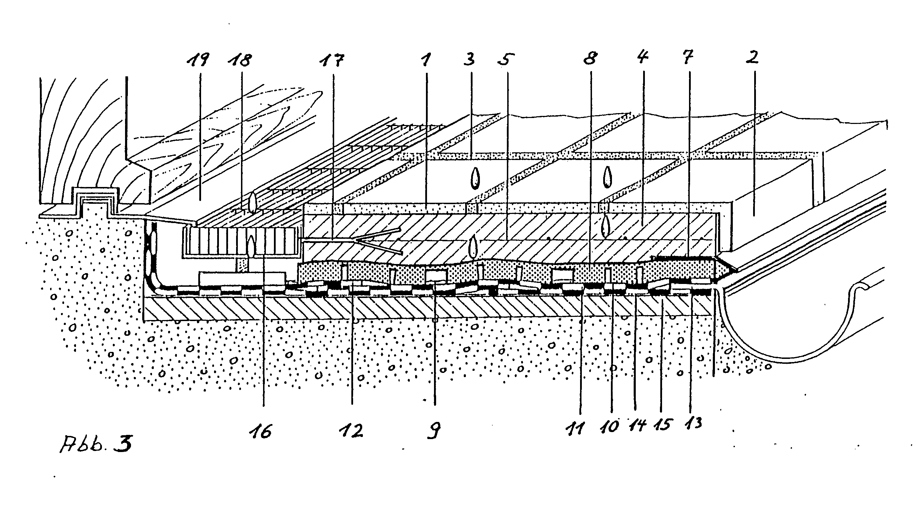

In den Abbildungen 2 und 3 ist die Verwendung des erfindungsgemäßen Drainageelements bei der Herstellung eines keramischen Außenbelages, beispielsweise auf einem Balkon oder einer Terrasse, veranschaulicht. Die Drainageelemente werden zuerst ganzflächig auf der mit Feuchtigkeitsabdichtung 11 versehenen Oberfläche des Balkons bzw. der Terrasse ausgerollt. Für die nachfolgenden Arbeiten sind die Drainageelemente begehbar. Kleine Beschädigungen, die möglicherweise beim Begehen entstehen könnten, beeinträchtigen die Funktionsfähigkeit nicht.

Über den Drainageelementen wird — wie in den entsprechenden Richtlinien beschrieben — so verfahren, daß eine ca. 50mm dicke Lastverteilungsschicht 4 aus Estrichmörtel aufgebracht wird, in welche ein nicht-statisches Baustahlgewebe 5 eingebettet werden sollte. Als Belagabschluß bzw. auch als Abschluß der Lastverteilungsschicht wird an den offenen Seiten des Außenbelages entweder die in Abbildung 2 gezeigte dreischenkelige Profilschiene 6 oder die in Abbildung 3 gezeigte zweischenkelige Profilschiene 7 eingebaut. Diese Profilschienen bestehen aus einem nichtrostenden Material. Ein Schenkel dieser Profilschiene steht über das Drainageelement vor und zeigt schräg nach unten, so daß er als Tropfkante sowie Sichtschutz für die offenen Drainagekanäle dient.

Der frostsichere keramische Fliesenbelag 1 wird "frisch in frisch" auf den Zementestrich verlegt und nach dem Abbinden verfugt. Alternativ kann auch — wie in neuerer Zeit vielfach praktiziert — im Dünnbett auf einem vorgezogenen Estrich verlegt werden. Im Gegensatz zu den bisher üblichen Verfahren kann auf eine doppellagige Gleitfolie verzichtet werden, da die Lastverteilungsschicht 4 durch die Drainageelemente einwandfrei von der Abdichtungsebene getrennt wird.

Die konstruktive Höhe der Drainageelemente ist abhängig von den zum Teil unterschiedlichen Erfordernissen. Als zweckmäßig haben sich Dicken von 10, 20 und 30 mm, die in den meisten Fällen eingesetzt werden können, erwiesen.

Durch den Einbau von Drainagematten erhöht sich die Konstruktionshöhe. Es ist daher nicht ausgeschlossen, daß die vorgegebene Anschlußhöhe im Balkontürbereich nicht ausreichend ist. Für diesen Fall wird in der Türschwelle der Balkontüre eine höhenverstellbare Drainrinne 16 (Abb. 3) vorgesehen.

Durch den Einbau der druckstabilen Drainageelemente werden die Schwachstellen konventionell verlegter Außenbeläge, die im Zusammenhang mit der Durchfeuchtung zu sehen sind, beseitigt. Sollten die Abdichtungen nicht im Gefälle liegen und es zu Pfützenbildung innerhalb der Drainagekanäle kommen, hat dies keine Konsequenzen, da der Estrich keine direkte Verbindung zu den Wasseransammlungen besitzt.

Das erfindungsgemäße Drainageelement besitzt die nachstehend noch einmal zusammengefaßten Vorteile:

Die druckfesten Drainageelemente bilden eine kapillarbrechende Schicht aus unverrottbaren Stoffen, die vor der Herstellung eines keramischen Außenbelages auf die Feuchtigkeitsabdichtung verlegt werden. Sie umschließen einen größeren (30 bis 60%,-igen) Hohlraum, der auch belüftet ist.

Die Drainageelemente verfügen über eine ausreichend hohe Druckfestigkeit und passen sich einer uneben liegenden Abdichtung an. Die Belastbarkeit bei gleichmäßig verteilter Last beträgt etwa 20 kN/m² (etwa 2000 kg/m²). Beim Verdichten des Estrichs ist — bedingt durch den harten Schaumstoff — kein "Federn" der Mörtelschicht zu erwarten.

Das in den Belagaufbau eingedrungene Wasser tritt nach kurzer Durchdringungszeit unterhalb des Estrichs (in die Hohlräume der Drainschicht) aus. Kalziumkarbonatausscheidungen, die vor allem Dachrinnen und innen liegende Bodeneinläufe beeinträchtigen, werden drastisch vermindert.

Die Feuchtigkeitsbelastung des Estrichs wird erheblich reduziert.

Frostschäden und Ausblühungen an der Belagsoberfläche, die in aller Regel auf im Estrich befindliche Wasserlinsen zurückzuführen sind, werden erheblich vermindert, wenn nicht ausgeschlossen.

Auch wenn das angetroffene Gefälle nicht ausreichend (mindestens 2%) ausgebildet ist und eine Entwässerung aus allen Bereichen nicht gegeben ist, kann durch den Einbau der druckfesten Drainageelemente ein wesentlich sicherer Bodenbelag erstellt werden. Da die Drainschicht unterseitig belüftet ist, kann sich kein Dampfdruck innerhalb der Belagkonstruktion aufbauen. Der Estrich trocknet innerhalb kurzer Intervalle aus.

Risse von Außenbelägen, wie sie nicht ganz ungewöhnlich sind, beeinträchtigen die Haltbarkeit der Beläge kaum. Das hier eindringende Wasser sickert in die darunter befindlichen Hohlräume der Drainageschicht. Die Bewehrung aus nichtstatischem Baustahl kann dabei die Rißsicherheit wohl erhöhen, jedoch nicht restlos ausschließen.

Teilsanierungen der Feuchtigkeitsabdichtung an ihren typischen Schwachstellen, wie Wandanschlüssen, Geländerpfosten und innen liegenden Bodenabläufen sind verhältnismäßig einfach möglich, da der Belag durch die Distanzstege nicht direkt aufliegt. Er ist sozusagen "aufgestelzt".

Drainrinnen für den gebäudenahen Anschlußbereich ermöglichen auch dann den Einsatz der druckfesten Drainageelemente, wenn etwas geringere Konstruktionshöhen (als nach DIN vorgeschrieben) vorhanden sind.

Die thermisch bedingten Längenveränderungen des keramischen Bodenbelags sind von der Abdichtungsebene durch die druckstabilen Drainageelemente abgekoppelt. Dadurch wird eine mögliche Beschädigung der Feuchtigkeitsabdichtung so gut wie ausgeschlossen.

Die Feuchtigkeitsabdichtung wird vor der extremen Temperaturwechselbelastung des Oberbelages wirkungsvoll geschützt. Dieser liegt nicht direkt auf und ist durch die Distanzstreifen (aus wärmedämmendem Hart-Schaumstoff) an der Weitergabe hoher Temperaturen gehindert.

Zeichenerklärung

1. Keramischer Belag.
2. Balkon-Randplatten.
3. Mineralische Verfugung.
4. Lastverteilungsschicht.
5. Nicht-statische Armierung.
6. Dreischenkeliges Abschlußprofil.
7. Zweischenkeliges Abschlußprofil.
8. Druckstabile Dränagematte.
  8a Wasserdurchlässige Abdeckschicht der Distanzstege.
  8b Distanzstege aus druckfesten Leichtbaustoffen, wie z.B. Hartschaum.
  8c Dränagelängskanäle zwischen den Distanzstegen.
  8d Dränagequerkanäle als Verbindung der Längskanäle.
  8e Halber Dränagequerkanal an einer Seite.
  8f Sollbruchstellen—lamellenartig eingeschnitten.
  8g Seitliche Überlappungen an zwei Seiten.
9. Wasserlinsen auf der Feuchtigkeitsabdichtung.
10. Trennlage.
11. Feuchtigkeitsabdichtung nach DIN.
12. Höherliegende Überlappungen.
13. Dachrinnenflansch.
14. Dampfdruckausgleichsschicht.
15. Gefälleestrich.
16. Dränrinne mit höhenverstellbaren Füßen.
17. Mörtelanker.
18. Gitterrost.
19. Balkontürprofil.

**Patentansprüche**

1. Für die Herstellung von Flächendrainagen zur Entwässerung darüberliegender Estriche, Mörtelschichten oder anderer Beläge bestimmtes Drainageelement (8) mit einer Abdeckschicht aus dünnem biegeweichem luft- und wasserdurchlässigem Material, unter welcher ein System von durch die Abdeckschicht hindurchtretendes Wasser sammelnde und ableitende Kanäle bildenden, aus druckfesten Leichtbaustoffen bestehenden, Distanzelementen angeordnet ist, wobei das die Abdeckschicht bildende Material die Form einer langgestreckten Mattenbahn (8a) hat, auf deren Unterseite die Distanzelemente in Form von mit Abstand voneinander quer zur Mattenbahn-Längsrichtung verlaufenden, in parallelen Reihen angeordneten Distanzstegen (8b) derart aufgeklebt sind, daß die mit den Distanzstegen (8b) versehene Mattenbahn (8a) aufrollbar ist.

2. Drainageelement nach Anspruch 1, dadurch gekennzeichnet, daß die Distanzstege (8b) von Hartschaumstreifen gebildet sind.

3. Drainageelement nach Anspruch 1 oder 2, dadurch gekennzeichnet, daß die Distanzstege (8b) rechteckige, quadratische, trapezförmige oder auch abgerundete Querschnittsformen haben.

4. Drainageelement nach einem der Ansprüche 1 bis 3, dadurch gekennzeichnet, daß in den Distanzstegen (8b) in deren Längsrichtung voneinander beabstandete, über die gesamte Breite der Stege durchgehende, Drainagequerkanäle (8d) bildende Aussparungen eingearbeitet sind.

5. Drainageelement nach Anspruch 4, dadurch gekennzeichnet, daß an einem Ende der Distanzstege (8b) jeweils ein zum äußeren Ende des jeweiligen Distanzsteges hin offener Drainagequerkanal (8e) mit einem etwa dem halben Querschnitt der übrigen Drainagequerkanäle entsprechenden Querschnitt vorgesehen ist.

6. Drainageelement nach Anspruch 4 oder 5, dadurch gekennzeichnet, daß in den Distanzstegen (8b) querverlaufende Sollbruchstellen (8f) in im Vergleich zum Abstand der Drainagequerkanäle (8d) geringeren Abständen eingearbeitet sind.

7. Drainageelement nach einem der Ansprüche 1 bis 6, dadurch gekennzeichnet, daß die Mattenbahn (8a) an zwei rechtwinklig zueinander verlaufenden Rändern über die Breite der Distanzstege (8b) hinaus vorstehende Überlappungsstreifen (8g) aufweist.

**Revendications**

1. Elément de drainage (8) destiné à la réalisation de drainages de surface pour l'évacuation de l'eau de chapes, couches de mortier ou autres revêtements situés au-dessus, comportant une couche de couverture en matériau mince flexible perméable à l'air et à l'eau sous laquelle est placé un système d'éléments entretoises qui sont en matériaux de construction légers résistant à la compression et forment des canaux recueillant et évacuant l'eau qui traverse la couche de couverture, le matériau qui forme la couche de couverture étant une bande de mat (8a) sur le dessous de laquelle les éléments entretoises, constitués de nervures (8b) s'étendant, espacées, perpendiculairement à la direction longitudinale de la bande de mat et disposées en rangs parallèles, sont collés de façon telle que la bande de mat (8a) pourvue de ces nervures entretoises (8b) puisse être enroulée.

2. Elément de drainage selon la revendication 1, caractérisé par le fait que les nervures entretoises (8b) sont formées de bandes de matière alvéolaire rigide.

3. Elément de drainage selon l'une des revendications 1 et 2, caractérisé par le fait que les nervures entretoises (8b) ont des formes de section rectangulaires, carrées, trapézoïdales ou encore arrondies.

4. Elément de drainage selon l'une des revendications 1 à 3, caractérisé par le fait que dans les nervures entretoises (8b) sont ménagés des évidements espacés dans la direction longitudinale de celles-ci, s'étendant sur toute la largeur de

9       **EP 0 178 382 B1**        10

celles-ci et formant des canaux transversaux de drainage (8d).

5. Elément de drainage selon la revendication 4, caractérisé par le fait qu'à une extrémité des nervures entretoises (8b) est prévu un canal transversal de drainage (8e) ouvert vers l'extrémité extérieure de la nervure entretoise et de section environ moitié de celle des autres canaux transversaux de drainage.

6. Elément de drainage selon l'une des revendications 4 et 5, caractérisé par le fait que dans les nervures entretoises (8b) sont prévus des endroits de rupture (8f) s'étendant transversalement et moins espacés que les canaux transversaux de drainage (8d).

7. Elément de drainage selon l'une des revendications 1 à 6, caractérisé par le fait que la bande de mat (8a) présente sur deux bords perpendiculaires des bandes de recouvrement (8g) dépassant de la largeur des nervures entretoises (8b).

**Claims**

1. Drainage element (8) for the manufacture of surface drainage systems for the drainage of floor finishes, mortar layers or other coverings above it including a cover layer of thin, flexible air and water-permeable material, below which is arranged a system of spacer elements which comprise pressure-resistant light constructional materials and define channels which collect and conduct away water which passes through the cover layer, the material forming the cover layer having the form of an elongate mat web (8a), to whose underside the spacer elements in the form of spacer bars (8b) arranged in spaced parallel rows extending transverse to the longitudinal direction of the mat web are so secured that the mat web (8a) provided with the spacer bars (8b) may be rolled up.

2. Drainage element as claimed in Claim 1, characterised in that the spacer bars are constituted by rigid foam strips.

3. Drainage element as claimed in Claim 1 or 2, characterised in that the spacer bars (8b) have rectangular, square, trapezium-shaped or rounded cross-sectional shapes.

4. Drainage element as claimed in one of Claims 1 to 3, characterised in that formed in the spacer bars (8b) spaced apart from one another in their longitudinal direction are recesses forming transverse drainage channels (8d) which are continuous over the entire breadth of the bars.

5. Drainage element as claimed in Claim 4, characterised in that provided at one end of the spacer bars (8b) there is a transverse drainage passage (8e) which is open towards the outer end of each spacer bar and which has a cross-section corresponding to about half the cross-section of the remaining transverse drainage channels.

6. Drainage element as claimed in Claim 4 or 5, characterised in that formed in the spacer bars (8b) are transversely extending predetermined breaking points (8f) at a smaller spacing in comparison to the spacing of the transverse drainage channels (8d).

7. Drainage element as claimed in one of Claims 1 to 6, characterised in that at two edges extending at right angles to one another the mat web (8a) has overlapping strips (8g) projecting a distance greater than the breadth of the spacer bars (8b).

Abb.1

Abb.2

Рис. 3